# DEMANDE DE BREVET EUROPEEN

(11) **EP 1 285 687 A1**
(43) Date de publication de la demande: **26.02.2003**
(21) Numéro de dépôt: 02292067.2
(22) Date de dépôt: 21.08.2002
(51) Int. Cl.: B01D 53/18

(54) **Dispositif d'absorption de composé dans un effluent gazeux**

(30) Priorité: 21.08.2001 FR 0110948
(71) Demandeur: CENTRE NATIONAL DE LA RECHERCHE SCIENTIFIQUE (CNRS), 75016 Paris (FR)
(72) Inventeur: Fonade, Christian, 31520 Ramonville Saint Agne (FR)
(74) Mandataire: Texier, Christian

(57) **Abrégé**

L'invention concerne un dispositif de récupération de composés présents dans un fluide gazeux, le dispositif comportant un canal de transfert (110) pour ce fluide gazeux, muni de moyens de pulvérisation d'un solvant au sein de ce canal de transfert, dispositif caractérisé en ce qu'il comporte en outre des moyens pour générer, dans le canal de transfert (110), un flux tournant autour d'une direction principale d'écoulement de ce canal de transfert.

## Description

L'invention concerne la séparation de composés volatiles présents dans un gaz, notamment lorsque la concentration en de tels composés est faible.

L'invention concerne ainsi notamment la récupération par concentration de molécules gazeuses spécifiques initialement diluées dans un écoulement d'air.

Les principaux domaines d'application sont d'une part la récupération de molécules d'intérêt (association du procédé avec une purification par membranes par exemple) et d'autre part la dégradation de polluants (association du procédé et d'un traitement final biologique ou par incinération par exemple).

Ainsi notamment, le traitement des effluents gazeux industriels devient de nos jours une priorité. Ces effluents, qui proviennent essentiellement du "lavage" des atmosphères d'ateliers utilisant des solvants, sont caractérisés par un très fort débit gazeux (pour une unité, la base de 10 000 à 12 000 m³/h est classique) et de faibles concentrations des molécules polluantes ( < 10 g/m³).

On cherche typiquement à concentrer ces molécules dans un débit de gaz pollué beaucoup plus faible de façon à pouvoir ensuite appliquer les procédés classiques de dégradation (incinération, réaction biochimique) dans des conditions économiques intéressantes.

S'agissant enfin d'un problème d'environnement, les procédés doivent être les plus rustiques possible pour ne nécessiter que des frais de suivi et de maintenance réduits.

Dans l'art antérieur, on a notamment proposé de faire circuler le gaz dans une colonne de solvant à contre-courant de telle façon que les composés à récupérer soient absorbés dans ce solvant.

Pour améliorer les rendements, on a également proposé de pulvériser un solvant dans un flux de gaz chargé, puis de faire déboucher le mélange gaz/gouttelettes obtenu dans un réservoir de solvant (principe de l'aéro-éjecteur). Une telle pulvérisation permet un transfert efficace des composés vers le solvant du réservoir.

Il est apparu toutefois souhaitable d'améliorer encore les rendements d'un tel dispositif.

C'est ce dernier but que l'on se propose d'atteindre grâce à l'invention, c'est à dire grâce à un dispositif de récupération de composés présents dans un fluide gaz, le dispositif comportant un canal de transfert pour ce fluide gazeux, muni de moyens de pulvérisation d'un solvant au sein de ce canal de transfert, dispositif caractérisé en ce qu'il comporte en outre des moyens pour générer, dans le canal de transfert, un flux tournant autour d'une direction principale d'écoulement de ce canal de transfert.

On propose également selon l'invention un procédé de récupération de composés présents dans un fluide gazeux, comprenant les étapes consistant à transférer ce fluide gazeux dans un canal de transfert et à pulvériser un solvant dans ce canal, caractérisé en ce qu'il comporte en outre l'étape consistant à créer un flux tournant dans le canal autour d'une direction principale d'écoulement du canal.

D'autres caractéristiques, buts et avantages de l'invention apparaîtront à la lecture de la description détaillée qui va suivre, faite en référence aux figures annexées sur lesquelles :
- la figure 1 et la figure 2 sont des schémas d'implantation générale d'un dispositif de récupération selon l'invention ;
- la figure 3 est une coupe longitudinale un dispositif d'absorption selon l'invention ;
- la figure 4 est une coupe longitudinale détaillée d'une partie principale de ce même dispositif d'absorption ;
- la figure 5 représente un désorbeur d'un dispositif d'ensemble selon l'invention ;
- la figure 6 représente un séparateur d'un dispositif d'ensemble selon l'invention ;
- la figure 7 représente l'évolution d'une pression dans un tube principal du désorbeur de la figure 5, en fonction d'une pression d'alimentation de ce désorbeur.

L'objectif recherché, dans l'exemple de réalisation qui va être décrit, est de concentrer dans un faible débit gazeux les molécules d'intérêt ou les polluants contenus dans de forts débits d'effluents gazeux industriels.

On applique ici successivement et en fonctionnement continu : l'absorption de ces molécules (ici initialement gazeuses) dans un solvant liquide à l'aide d'un contacteur 100, la désorption des gaz dissous dans ce solvant à l'aide d'un désorbeur 200, et la séparation gaz / liquide à l'aide d'un séparateur 300 de façon à d'une part récupérer le gaz concentré et d'autre part recycler le solvant.

Ce même procédé sera aussi utilisable lorsque les molécules peuvent être valorisées, car on pourra alors appliquer des méthodes de séparation efficaces (distillation, séparation membranaire) afin de récupérer des produits purifiés.

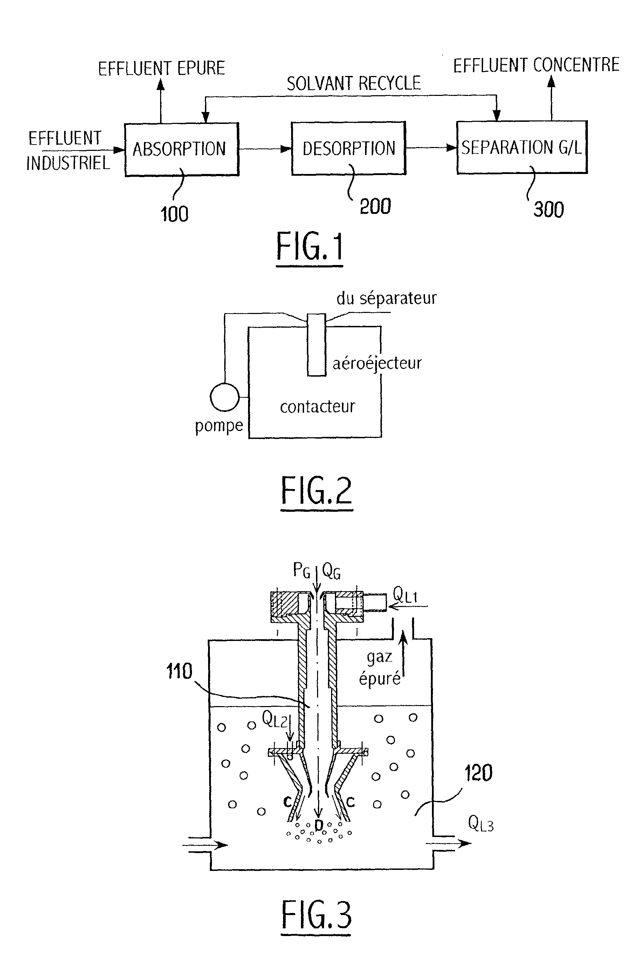

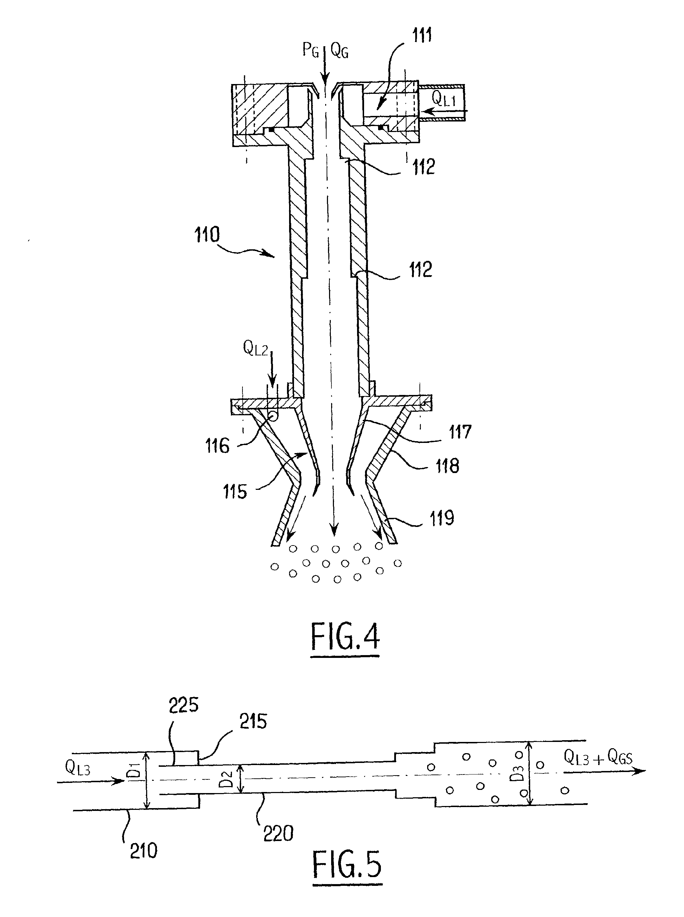

L'absorption est réalisée par un "aéro-éjecteur" ou canal de transfert à pulvérisation 110 représenté aux figures 3 et 4, alimenté par un flux de gaz pollué Q_{G} et par deux flux de solvant liquide Q_{L1} et Q_{L2}.

Plus précisément, une première injection de solvant est réalisé par un dispositif de pulvérisation 111 situé en entrée du canal de transfert 110.

Le mélange diphasique principal est réalisé en partie courante du canal 110 qui comporte plusieurs élargissements brusques 112 dont le rôle est de générer des turbulences d'intensités importantes. Sous cette action, les phases gaz et liquide, initialement séparées, subissent un cassage aboutissant à des gouttes de liquide noyées dans une phase gaz très discontinue : l'aire interfaciale de contact gaz-liquide devient importante, aussi bien que le coefficient de transfert.

Si C_{α} est le composé à récupérer, notamment gazeux, que l'on veut absorber, le liquide injecté ne doit pas le contenir, ou éventuellement à très faible concentration (très inférieure à la concentration de saturation).

Dans de nombreux cas, et notamment pour des composés peu solubles, il est nécessaire d'augmenter les capacités de transfert : c'est l'un des rôles du système 115 placé dans le canal de transfert 110, en aval de l'injection de liquide 111 et en aval de la partie courante du canal 110.

Un débit fluide Q_{L2}, ici un débit liquide et même plus précisément un débit de solvant, est injecté par un petit orifice tangentiel 116, et provoque un écoulement tournant (forte vitesse tangentielle) dans le canal de transfert par effet des forces centrifuges, ce fluide s'écoule en mouvement tournant le long de parois encerclant la direction principale du canal 110.

La pression relative dans une partie de coeur de ce mouvement tournant devient typiquement négative : cela crée un processus de succion au niveau de l'entrée du canal de transfert (aéro-éjecteur), et par conséquent une pression d'alimentation nécessaire P_{G} du gaz pollué en entrée du canal de transfert qui est particulièrement faible, voire qui peut être la pression atmosphérique. Cette baisse de pression, notamment au voisinage de l'injection de solvant Q_{L1}, accroît le taux de transfert dans la partie courante du canal 110, qui peut ainsi aller jusqu'à 100%.

Cet écoulement tournant fait également naître des contraintes de cisaillement au niveau du flux tournant qui provoquent un mélange intime des phases gaz et liquide, aboutissant à un écoulement liquide contenant de fines bulles de gaz. Cette zone est donc le siège d'un transfert gaz-liquide important.

L'écoulement tournant permet donc d'une part de diminuer la pression de compression nécessaire pour l'effluent, augmentant ainsi les taux de transfert des gaz dans la partie courante de l'aéro-éjecteur, et fait naître une zone de transfert supplémentaire, de forte efficacité.

Plus précisément les moyens pour générer un flux tournant sont positionnés au niveau de l'arrivée de l'aéro-éjecteur 110 dans un réservoir 120 que l'on décrira ci-après. Ce moyens à flux tournant comprennent en outre deux parois 117 et 118 concentriques et entourant un axe principal du flux d'effluent. L'injecteur 116 de fluide tournant étant placé entre ces deux parois, le flux tournant est d'abord guidé en rotation entre ces deux parois 117 et 118. L'espace entre les deux parois est ouvert vers la direction aval du canal de transfert, de sorte que le flux tournant rejoint le flux principal d'effluent par cette partie ouverte, entourant à cet endroit le flux principal d'effluent.

Ces parois concentriques se restreignent en diamètre vers la direction aval du canal de transfert 110 de sorte que la vitesse tournante tend à s'accélérer à l'approche de la sortie de ces parois concentriques. Le canal de transfert (ou aéro-éjecteur) présente, en aval des parois 117 et 118, une paroi 119 qui s'élargit dans la direction aval du canal, et qui tend ainsi à ralentir alors la vitesse des gaz.

La totalité (Q_{L1} + Q_{L2}) du débit liquide est récupérée dans un réacteur 120, formé par un réservoir de solvant dans lequel l'aéro-éjecteur 110 débouche en direction descendante.

Une importante partie du flux émis dans le solvant remonte à la surface sous la forme d'un gaz nettoyé, tandis que le composé C_{α} à récupérer reste dans le solvant. Le gaz récupéré en surface ne contient plus de composé C_{α} et peut par exemple être rejeté dans l'atmosphère.

Cet ensemble, constitué de l'aéro-éjecteur 110 et du réacteur 120, forme le contacteur gaz-liquide 100 dans lequel se réalise le processus d'absorption.

On réalise grâce à cet ensemble un transfert complet.

Le liquide présent dans le réacteur 120 contient les composés C_{α} sous forme de gaz dissous.

Afin d'éviter une concentration de composé C_{α} trop grande, la phase liquide contenue dans le réacteur 120 est renouvelée de façon continue (débit Q_{L3}).

Les débits liquide QL1 et QL2 peuvent soit provenir d'un recyclage après séparation des composés contenus dans le solvant du réacteur, soit être créés par un recyclage interne via une pompe (figure 2).

Le solvant chargé issu du réacteur 120 est ensuite traité dans un désorbeur 200 représenté à la figure 5.

La désorption des gaz dissous consiste à créer un nouvel écoulement gaz-liquide à bulles de gaz dispersées provenant des gaz dissous dans le liquide. Une pression relative négative est pour cela provoquée dans le désorbeur 200, ici par l'écoulement lui-même.

Une chambre 210, en forme de tube de diamètre D₁, reçoit le débit Q_{L3} de liquide provenant du réacteur 120 et contenant les composés C_{α} sous forme dissoute.

Un ou plusieurs tubes 220 de diamètre D₂ inférieur à D1 sont issus en aval de cette chambre 210, et implantés de telle façon que leur extrémité amont 225 soit située en retrait amont d'un fond plein 215 qui obture la chambre 210.

Par cette configuration particulière, et moyennant un débit Q_{L3} minimum, un phénomène de cavitation se produit dans le (ou les) tube(s) 220 : la pression y est alors très proche (ou égale) de la tension de vapeur du liquide.

Cette forte dépression provoque le déséquilibre des gaz dissous et il y a création de microbulles. Ces dernières contiennent tous les gaz classiques dissous dans le liquide (N, O₂, CO₂,...) et aussi les composés.

On obtient ainsi un débit de gaz Q_{GS} bien plus petit que le débit de gaz Q_{G} d'effluent initial mais qui contient la totalité des composés C_{α}.

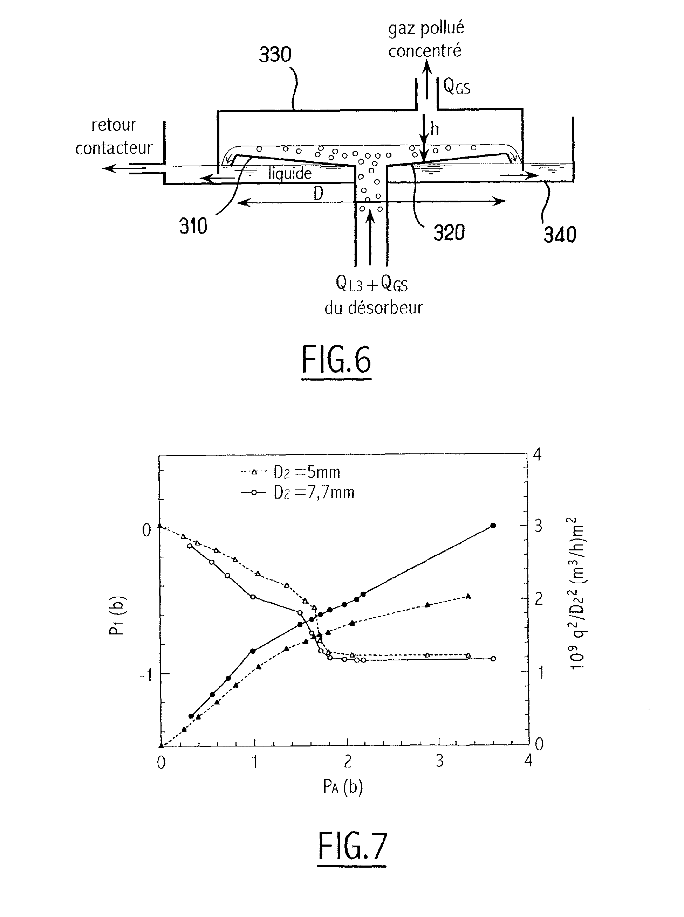

Le présent dispositif comporte enfin un troisième élément 300 (figure 6), appelé séparateur.

L'objectif de ce troisième élément 300 est d'effectuer la séparation entre les débits Q_{LS} liquide et Q_{GS} gazeux. Sachant que le gaz est sous forme de microbulles, il est nécessaire d'assurer un temps de séjour relativement long du mélange dans ce séparateur 300.

Dans une configuration préférée du séparateur 300, le mélange diphasique est amené à s'écouler sur un cône 310 (ou plan incliné) de diamètre (ou longueur L) tel que, dans une zone courante 320 de ce cône, on obtient une vitesse hydraulique faible et un tirant d'eau h petit. Le cône (ou la pente) est alimenté par une bouche placée au fond de ce cône, de sorte que le mélange parcourt le cône depuis le fond, vers ses bordures supérieures. Dans ces conditions, les microbulles atteignent la surface libre S rapidement, et tout au moins avant d'avoir atteint l'extrémité du cône (ou du plan incliné). Ces contraintes requièrent un angle du cône assez important (ou du plan incliné) et un diamètre D (ou une longueur du plan incliné) également assez important, pour obtenir un rendement satisfaisant.

Le gaz ainsi séparé est recueilli dans une cloche supérieure 330, recouvrant le cône (ou la pente) de séparation. Ce gaz est évacué pour être ensuite traité, soit pour récupérer les composés C_{α} s'ils sont valorisables, soit pour les dégrader s'il s'agit de polluants.

Le liquide est quant à lui recueilli dans un bac inférieur 340 puis recyclé vers le contacteur 100. Typiquement, le liquide ne contient plus de composés C_{α}. Il faut noter que si ce liquide contient encore une concentration résiduelle de C_{α}, le bon fonctionnement du procédé nécessite seulement que cette concentration soit bien inférieure à la concentration de saturation du composé dans le liquide.

Si l'on souhaite réaliser un système plus compact, le séparateur 300 est situé au-dessus du contacteur 100, ce qui correspond à une géométrie légèrement différente de celle décrite ci-dessus, mais obéissant aux mêmes principes de séparation du gaz et du liquide.

Les performances de transfert de l'aéro-éjecteur ont été étudiées ;

Les taux de transfert obtenus pour des composés de solubilités dans l'eau décroissantes (éthanol - méthyl éthyl cétone - butyl acétate) se sont révélés particulièrement élevés.

Les essais dans le cas d'un transfert d'oxygène (composé peu soluble) ont notamment donné un taux de transfert de 100 %.

Des études de faisabilité ont été réalisées sur des désorbeurs de 00000000000000diamètre D₂ de 5 et 7,7 mm. Ces essais avaient pour but de confirmer l'évolution des pressions le long du système. Les résultats de ces essais sont représentés à la figure 7.

Au-delà d'une pression d'alimentation de 2 bars, la pression dans tout le tube principal 220 est bien au niveau de la tension de vapeur du liquide. Ces fortes dépressions provoquent la nucléation de microbulles contenant les gaz dissous. L'observation directe de l'écoulement montre d'ailleurs qu'il est suffisant pour abaisser la concentration en composé C_{α} dissous au-dessous des valeurs nécessaires à la séparation.

Il ressort donc un caractère particulièrement avantageux d'un tel désorbeur en soi, indépendamment de la présence de l'aéro-éjecteur, bien qu'une synergie entre eux deux fasse naître une efficacité générale surprenante.

En termes d'avantages, le système proposé ici permet d'atteindre des rapports de débits de l'ordre de 15 à 20 entre phase liquide et phase gazeuse.

Ce procédé complet permet de diminuer les débits de solvant nécessaires : via la mise en oeuvre de la désorption et de la séparation, on travaille avec un volume faible, et de plus constant, de solvant recyclé.

Les limites que le présent procédé contribue à déplacer sont entre autres les conditions d'applicabilité du procédé par les entreprises dans le cadre des problèmes environnementaux qu'elles doivent résoudre souvent sous contrainte, notamment en ce qui concerne les besoins de technicité et de maintenance, et les coûts d'investissement et de fonctionnement.

Habituellement, les diverses méthodologies applicables au traitement des gaz peuvent être classées en deux catégories, à savoir celles qui aboutissent directement à un gaz épuré (ce sont les procédés biologiques et l'incinération), et celles qui concentrent les polluants dans des débits de gaz plus petits (ce sont la condensation, l'adsorption et l'absorption).

Le procédé proposé ici relève donc de la seconde catégorie : une étape ultime de traitement (traitement biologique, incinération) sera parfois avantageuse, mais ne concernera que des débits de gaz beaucoup plus petits, ce qui rend la mise en oeuvre de ces traitements beaucoup plus intéressante (des points de vue technique et économique) que lorsqu'ils sont utilisés seuls.

Si l'on met à part les procédés biologiques (efficaces mais actuellement difficiles à implanter dans des entreprises n'utilisant pas déjà des processus biologiques), on peut comparer le procédé proposé par rapport aux deux techniques actuellement appliquées : l'adsorption et l'incinération.

Les avantages par rapport à l'adsorption sont nombreux.

Un premier avantage est le fonctionnement continu du procédé. Lors de l'adsorption, du fait des étapes successives de rétention et de lavage, au minimum deux colonnes d'adsorption sont nécessaires et fonctionnent séquentiellement.

Un second avantage est le volume du contacteur : la géométrie actuelle de l'aéro-éjecteur permet d'envisager de diminuer le volume utile jusqu'à une valeur de l'ordre de 0.001 m³/(m³/h) de gaz traité, alors que les valeurs actuelles sont de l'ordre de 0.006.

Un troisième avantage est le débit de gaz pollué Q_{GS} qu'il est nécessaire de traiter dans l'étape ultime (valorisation ou dégradation). Dans le procédé d'adsorption, ce débit est de l'ordre du 1/10^{ème} du débit initail Q_{G}. Avec le procédé proposé, ce débit Q_{GS} devrait être de l'ordre du 1/400^{ème} de Q_{G}.

De plus, tout comme pour l'adsorption, il est possible d'effectuer une valorisation ou une dégradation des produits, et d'adapter facilement le procédé aux composés concernés (type de garnissage d'une part, type de solvant d'autre part).

Les avantages par rapport à l'incinération (en tant que procédé seul) sont également multiples.

Un premier avantage est le débit de gaz pollué Q_{GS} traité : rapport de l'ordre de 400.

Un deuxième avantage est l'énergie nécessaire pour la combustion : ce point est évidemment lié au point précédent, mais aussi éventuellement au fait que le procédé proposé augmente beaucoup la concentration des composés à éliminer. Si ces composés ont un niveau énergétique suffisant, cette énergie est libérée lors de la combustion et peut participer à une auto-combustion qui diminue d'autant la consommation énergétique de l'incinération.

Les avantages généraux par rapport aux contraintes liées au domaine d'application (problèmes environnementaux) sont notamment la rusticité du procédé, le faible niveau de technicité nécessaire et le coût réduit de maintenance, les faibles coûts d'investissement et de fonctionnement.

En effet, les divers éléments (aéro-éjecteur, désorbeur, séparateur) sont des unités sans pièces mobiles (fiabilité), la seule source d'énergie éventuellement souhaitable étant une pompe hydraulique, élément parfaitement connu et maîtrisé dans toutes les entreprises.

## Revendications

1. Dispositif de récupération de composés présents dans un fluide gazeux, le dispositif comportant un canal de transfert (110) pour ce fluide gazeux, et des moyens de pulvérisation (111) d'un solvant au sein de ce canal de transfert, dispositif **caractérisé en ce qu'**il comporte en outre des moyens (115) pour générer, dans le canal de transfert (110), un flux tournant autour d'une direction principale d'écoulement de ce canal de transfert.

2. Dispositif selon la revendication 1, **caractérisé en ce que** les moyens (115) pour générer un flux tournant sont positionnés en aval des moyens de pulvérisation (111).

3. Dispositif selon l'une quelconque des revendications 1 ou 2, **caractérisé en ce que** le canal de transfert (110) est muni de moyens (112) pour générer des turbulences.

4. Dispositif selon la revendication 3, **caractérisé en ce que** les moyens pour générer un flux tournant (115) sont placés en aval des moyens pour générer des turbulences (112).

5. Dispositif selon l'une quelconque des revendications précédentes, **caractérisé en ce qu'**il inclut un réservoir de solvant (120) dans lequel débouche le canal de transfert (110).

6. Dispositif selon la revendication 5, **caractérisé en ce que** les moyens pour générer un flux tournant (115) sont positionnés au niveau de l'arrivée du canal de transfert (110) dans le réservoir (120).

7. Dispositif selon l'une quelconque des revendications précédentes, **caractérisé en ce que** les moyens (115) pour générer un flux tournant incluent un injecteur de solvant (112).

8. Dispositif selon l'une quelconque des revendications précédentes, **caractérisé en ce que** les moyens (115) pour générer un flux tournant incluent deux parois (117, 118) sensiblement concentriques et entourant un axe principal du canal de transfert (110), et un injecteur de fluide (116) placé entre ces deux parois, l'espace entre les deux parois étant ouvert vers la direction aval du canal de transfert (110).

9. Dispositif selon la revendication 8, **caractérisé en ce que** les parois concentriques (117, 118) présentent chacune au moins une portion qui se restreint en diamètre vers la direction aval du canal de transfert.

10. Dispositif selon la revendication 9, **caractérisé en ce que** le canal de transfert (110) présente, en aval des parois (117, 118) qui se restreignent, au moins une paroi (119) qui s'élargit dans la direction aval du canal (110).

11. Dispositif selon la revendication 3, **caractérisé en ce que** les moyens pour générer les turbulences comprennent au moins un décrochement d'élargissement (112) du canal de transfert.

12. Dispositif selon l'une quelconque des revendications précédentes, **caractérisé en ce qu'**il comporte un réservoir de solvant (120) dans lequel débouche le canal de transfert (110) et, en sortie de ce réservoir, une conduite de sortie de solvant munie de moyens (215, 225) pour faire naître un phénomène de cavitation dans cette conduite, de sorte que le composé à récupérer se concentre dans des bulles de gaz générées par cette cavitation.

13. Dispositif selon la revendication 12, **caractérisé en ce que** les moyens (215, 225) pour faire naître le phénomène de cavitation comprennent une chambre de circulation de solvant (210), un tube (220) s'étendant principalement en aval de la chambre (210), ce tube présentant une extrémité amont faisant saillie à l'intérieur de la chambre (210), la chambre (210) s'étendant jusqu'en aval de cette partie faisant saillie (225) puis se refermant autour de cette partie faisant saillie.

14. Dispositif selon la revendication 13, **caractérisé en ce que** les moyens pour générer une cavitation (215, 225) comprennent en outre un ou plusieurs décrochements en élargissement de la conduite de sortie du réservoir.

15. Procédé de récupération de composés présents dans un fluide gazeux, comprenant les étapes consistant à transférer ce fluide gazeux dans un canal (110) de transfert et à pulvériser un solvant dans ce canal (110), **caractérisé en ce qu'**il comporte en outre l'étape consistant à créer un flux tournant dans le canal (110) autour d'une direction principale d'écoulement du canal (110).
